# EUROPÄISCHE PATENTSCHRIFT

(11) **EP 0 868 444 B1**
(45) Veröffentlichungstag und Bekanntmachung des Hinweises auf die Patenterteilung: **22.09.1999**
(21) Anmeldenummer: 96944623.6
(22) Anmeldetag: 20.12.1996
(51) Int. Cl.: C08F 8/36, B01J 39/20

(54) **VERFAHREN ZUR HERSTELLUNG STARK SAURER KATIONENAUSTAUSCHER**
PROCESS FOR THE PREPARATION OF VERY ACIDIC CATION EXCHANGERS
PROCEDE DE PREPARATION D'ECHANGEURS DE CATIONS FORTEMENT ACIDES

(30) Priorität: 21.12.1995 DE 19548012; 24.10.1996 DE 19644217
(43) Veröffentlichungstag der Anmeldung: 07.10.1998
(73) Patentinhaber: IAB Ionenaustauscher GmbH Bitterfeld, 06803 Greppin (DE)
(72) Erfinder: BACHMANN, Reinhard, D-04439 Engelsdorf (DE); FEISTEL, Lothar, D-04509 Delitzsch (DE); SEIDEL, Rüdiger, D-06792 Sandersdorf (DE); SIEKIERA, Karl-Heinz, D-06766 Wolfen (DE)
(74) Vertreter: Zobel, Manfred, Dr.
(86) Internationale Anmeldenummer: EP9605784
(87) Internationale Veröffentlichungsnummer: WO9723517

(56) Entgegenhaltungen:
- EP-A- 0 002 346
- EP-A- 0 009 395
- US-A- 2 597 438
- US-A- 5 244 926
- DATENBANK: "CHEMICAL ABSTRACTS" (DATEN- ANBIETER: STN) Abstr.125: 35413, Colombus, OH, USA;& JP,A,08 089 818(ROHM & HAAS USA) 9.April 1996 XP002029166

## Beschreibung

Die Erfindung betrifft ein Verfahren zur Herstellung von mechanisch und osmotisch stabilen, hochkapazitativen stark sauren Kationenaustauschem der Komgröße ab 0,1 mm und größer durch Sulfonierung von gelartigen oder porösen Perlpolymerisaten mit Schwefelsäure ohne Einsatz inerter chlorhaltiger Quellmittel undloder von Komonomeren auf Acrylnitrilbasis.
Aus der Literatur sind zahlreiche Untersuchungen bekannt, die sich mit der Herstellung mechanisch und osmotisch stabiler Kationenaustauscher mit optimalen kapazitativen Eigenschaften beschäftigen.
Danach werden technisch einsetzbare stark saure Kationenaustauscher hauptsächlich durch Sulfonierung von periförmigen Styrol-Divinylbenzol-Kopolymeren hergestellt, wobei das Polymere mit einem inerten Quellmittel im Unterschuß vorgequollen wird und nachfolgend sulfoniert und aufgearbeitet wird. Als inertes Quellmittel hat sich dabei besonders 1,2-Dichlorethan bewährt. So wird in US-A-5 248 435 ein Verfahren zum Sulfonieren von porösen Styrol-Divinylbenzol-Copolymeren unter Zusatz chlorhaltiger Quellmittel mit einer 95 %igen Schwefelsäure bei 80 °C beschrieben.
Die Verwendung von 1,2-Dichlorethan ist jedoch wegen seiner leichtentzündlichen, toxischen und kanzerogenen Eigenschaften und den systemischen Wirkungen sowie des gefährlichen Zersetzungsproduktes Chlorwasserstoff kritisch geworden.
Die umweltsichere Handhabung des inerten Quellmittels erfordert erheblichen kostenintensiven technologischen und technischen Aufwand.

Da es sich aus dem Sulfonierungsprozeß nur unvollständig zurückgewinnen läßt und Spuren aus dem Endprodukt durch spezielle Behandlungen entfernt werden müssen, sind die gasförmigen und flüssigen Abprodukte des Produktionsprozesses mit Dichlorethan kontaminiert.
Sicherheitstechnisch wird gefordert, 1,2-Dichlorethan nach Gebrauch einer Verwertung oder Entsorgung zuzuführen, da eine unsachgemäße Beseitigung die Umwelt gefährdet. Dies erfordert nachgeschaltete kostenaufwendige Umweittechnologien wie Verbrennung in genehmigten chlorbeständigen Anlagen oder Aufarbeitung In lizensierten Regenerierungsanlagen sowie Kreislauffahrweisen, Adsorption oder Strippung.
Der Weg der Herstellung technisch einsetzbarer stark saurer Kationenaustauscher mit einer Komgröße von 0,1 mm aufwärts ohne Einsatz umweitmäßig bedenklicher Inerter Queilmittel wie 1,2-Dichlorethan, wurde In zurückliegender Zeit nicht weiterverfolgt, solange die bekannten technischen Verfahren hinsichtlich des Einsatzes des Inerten chlorhaltigen Quellmittels als unbedenklich betrachtet wurden. Die Entwicklungen, ohne inerte Quellmittel zu technisch einsetzbaren stark sauren Kationenaustauschem zu gelangen, lagen deshalb vor der Entwicklungsphase des Einsatzes von Quellmitteln.

Kationenaustauscher, die durch Sulfonierung von vemetzten Peripommerisaten aus Monovinylaromaten und Polyvinylaromaten, vorzugsweise aus Styrol und DMnylbenzol - wobei der Anteil an Vernetzer 3 bis 11 % beträgt - erhältlich sind, wurden bereits in der US-A-2 366 007 beschrieben. Bei der Herstellung dieser Austauscher ging man von Polymerisaten aus, die durch Polymerisation der Monomeren in Gegenwart von geringen Mengen Initiatoren unter langsam ansteigenden Temperaturen über mehrere Tage erhalten wurden. Die Sulfoniertemperaturen lagen über 100°C, dennoch trat bei der Hydratisierung weitgehender Komzerfall ein.

Weiterhin ist bekannt, Styrol-Divinylbenzol-Peripolymerisate durch eine Behandlung mit Schwefelsäure bei 100 °C in Gegenwart von Silbersulfat zu sulfonieren (J. Chem. Soc. 1949, S. 3303). Die so erhaltenen Produkte zeigten eine geringe mechanische Stabilität und eine nicht befriedigende Austauschkapazität.
Es wurde weiterhin versucht, die mechanische Stabilität dadurch zu verbessem, indem die Sulfonierung mit Chlorsulfonsäure in flüssigen Schwefeldioxid durchgeführt wird (US-A-2 809 959; DE-B-1 031 514). Nach dieser Methode wurden jedoch nur partiell sulfonierte Produkte erhalten. Außerdem sind Chlorsulfonsäure und flüssiges Schwefeldioxid technisch nicht einfach handhabbar.

Die gleiche Zielstellung verfolgt die Anmeldung DE-C-974 216. Hierbei wird das Styrol-Divinylbenzol-Kopolymerisat vor der Sulfonierung mit Chlorsulfonsäure zur Erzielung einer hohen Härte bzw. des Ausgleichs Innerer Spannungen einer Temperierung in der Weise unterworfen, indem man das Polymerisat 15 Minuten auf 180°C erhitzt und anschließend über eine Dauer von 16 h auf Raumtemperatur abkühlt. Die so hergestellten Polymerisate werden durch Einwirkung von Chlorsulfonsäure bei Temperaturen von 50 bis 80 °C sulfoniert.

Die DE-B-1 233 143 beschreibt ein Verfahren mit günstigeren Reaktionsbedingungen, in dem Polymere aus Styrol, Divinylbenzol, Acrylnitril oder Methacrylnitril eingesetzt werden, die mit 96 bis 99,1 %iger Schwefelsäure bei Reaktionstemperaturen zwischen 80 und 120 °C sulfoniert werden. Als vorteilhaft hat sich diese Verfahrensweise für Vernetzungsgrade des Divinylbenzols von 14 - 29 Gew.% erwiesen. Nachteil dieses Verfahrens ist der Einsatz von Acrylnitril, das als Gefahr- und Wasserschadstoff wie beim Einsatz von Quellmitteln kostenaufwendige sicherheitstechnische und Umweltmaßnahmen zur Folge hat.

EP-A-0 009 395 beschreibt die Herstellung von stark sauren Kationenaustauschem für den Bereich extrem kleiner Partikel mit einer Korngröße von 0,01 - 1,5 µm durch Sulfonieren von Styrol-Divinylbenzol-Copolymeren mit Schwefelsäure ohne Zusatz Inerter Quellmittel. Die Herstellung von stark sauren Kationenaustauschem in diesem Komgrößenbereich ist bis auf spezielle Anwendungsgebiete für die techn. Anwendung, die Komgrößen von 0,3 - 1,2 mm fordert, von geringer Bedeutung. Die stark sauren Kationenaustauscher der Komgröße ab 0,1 mm aufwärts sind mittels Sulfonierung ohne Zusatz von DCE nach dem beschriebenen Verfahren nicht herstellbar.

Der Erfindung liegt die Aufgabe zugrunde, ein Verfahren zu finden, nach dem durch Sulfonierung von gelartigen oder porösen Styrol-Divinylbenzol-Kopolymeren mittels techn. handlicher Sulfonierungsmittel ohne Einsatz Inerter chlorhaltiger Quellmittel und/oder von Komonomeren auf Acrylnitrilbasis mechanisch und osmotisch stabile, hochkapazitative stark saure Kationenaustauscher mit einer Komgröße ab 0,1 mm aufwärts herstellbar sind.

Es wurde nun gefunden, daß starke saure Kationenaustauscher mit den geforderten Eigenschaften erfindungsgemäß aus gelartigen oder porösen Styrol-Divinylbenzol-Kopolymeren auch als Peripolymerisate bezeichnet, deren Vernstzeranteil des Divinylbenzols 1 - 65 Gew.% beträgt, herstellbar sind, in dem diese bei Temperaturen von 125 bis 180 °C mit einer Schwefelsäure, deren Konzentration 80 bis 96 % beträgt, bis zu 20 Stunden sulfoniert werden. Danach wird der stark saure Kationenaustauscher nach den bekannten Methoden hydratisiert und ausgewaschen.
Bei den gelartigen oder porösen räumlich vemetzten Kopolymeren handelt es sich um Produkte, die durch Perlpolymerisation eines Gemisches aus den Monomeren Styrol und technischen Divinylbenzol handelsüblicher Zusammensetzung mit oder ohne Zusatz von Inertmitteln wie Kohlenwasserstoffen im Siedebereich zwischen 120 - 220 °C erhalten werden.
Weiterhin wurde gefunden, daß stark saure Kationenaustauscher ähnliche oder bessere charakteristische Qualitätsmerkmale, wie in den Tabellen aufgeführt, im Vergleich zu den noch herkömmlichen Verfahren erzeugten Produkten aufweisen, wenn bevorzugt innerhalb der Grenzwerte der erfindungsgemäßen Reaktionsbedingungen
- poröse Perlpolymerisate bei 130 - 140 °C und
- gelartige Perlpolymerisate bei 160 - 170 °C
mit 86 - 94 %iger Schwefelsäure 8 - 12 Stunden sulfoniert werden. Um eine völlig glatte Komoberfläche bei gelartigen Peripolymerisaten zu erzielen, sind die gefundenen höheren Temperaturen erforderlich, da bei Sulfonierungstemperaturen unterhalb 160 °C die Oberfläche charakteristische Vertiefungen, in Fachkreisen als Orangenhaut bezeichnet, aufweist. Die nach dem erfindungsgemäßen Verfahren sulfonierten Peripolymerisate werden nach bekannten Verfahren hydratisiert und aufgearbeitet.
Nach dem erfindungsgemäßen Verfahren sind mechanisch und osmotisch stabile, hochkapazitative stark saure Kationenaustauscher mit einer Korngröße von ≧ 0,1 mm herstellbar, wie es die in den Tabellen 1-3 ausgewiesenen charakteristischen Qualtätsmerkmale belegen.
Das erfindungsgemäße Sulfonierungsverfahren zeichnet sich gegenüber den bekannten technischen Verfahren durch folgende Vorteile aus:
- Selbst grobkömige Perlpolymerisate sind mit Schwefelsäure sulfonierbar
- Das Arbeiten mit den wesentlich schwieriger handhabbaren Sulfonierungsreagenzien wie Schwefeltrioxid und Chlorsulfonsäure entfällt damit.
- Auf die Vorquellung der Peripolymerisate mit einem inerten chlorhaltigen Quellmittel wie 1,2-Dichlorethan kann verzichtet werden.
- Damit entfällt die aufwendige und kostenintensive Entfernung und Rückgewinnung des 1,2-Dichlorethan aus den End-, Neben- und Abprodukten der Sulfonierung.
- Bei der Kopolymerisation von Styrol und Divinylbenzol brauchen keine festigkeitsfördernde und die Sulfonierung erleichternde aber die Umwelt gefährdenden Komonomeren wie Acrylnitril oder Methacrylnitril zugesetzt werden.
In den Ausführungsbeispielen 1 - 3 wird die Herstellung von stark sauren Kationenaustauschem durch Sulfonierung von gelartigen (Beispiel 1 u. 2) und porösen (Beispiel 3) Peripolymerisaten mit Schwefelsäure nach dem erfindungsgemäßen Verfahren näher beschrieben.
In den den Ausführungsbeispielen folgenden tabellarischen Übersichten werden die charakteristischen Qualitätsmerkmale und Stoffkenndaten erfindungsgemäß hergestellter stark saurer Kationenaustauscher mit den nach herkömmlicher Weise unter Einsatz des inerten chlorhaltigen Quellmittels 1,2-Dichlorethan hergestellten Produkten verglichen.

Tabelle 1 zeigt die Durchschnittswerte von mindestens je 3 Sulfonierungen gelartiger Peripolymerisate, bei den unterschiedlichen Bedingungen. Die Kenndaten machen deutlich, daß zwischen den vier verglichenen Sulfonierungsvarianten keine signifikanten Unterschiede bestehen. Besonders zu beachten sind die mechanischen und osmotischen Eigenschaften, die durch die Kugelgüte, Abrieb und das Schnellzyklusverhalten charakterisiert werden.

Tabelle 2 zeigt einen Vergleich der Endprodukte von 3 Sulfonierungsvarianten gelartiger Peripolymerisate. Verglichen wird die nutzbare Volumenkapazität (NVK) unter verschiedenen lonenaustauschbedingungen.

Die Werte sind mit der herkömmlichen Sulfonierung voll vergleichbar bzw. zeigen bei der 135 °C - Variante leichte Vorteile. Die bei dieser Temperatur sulfonierten gelartigen Peripolymerisate weisen die typischen Merkmale, die Orangenhautoberfläche auf.
Wenn in Abhängigkeit von den Anwendungsfällen einer glatten Oberfläche des Korns der Vorzug gegeben wird, so muß bei Temperaturen oberhalb 160 °C sulfoniert werden.

Tabelle 3 zeigt einen Vergleich der Sulfonierung eines porösen Polymerisates mit und ohne Dichlorethan analog Beispiel 3. Es handelt sich hier ebenfalls um Durchschnittswerte von mindestens 4 Versuchen. Auch dieser Vergleich macht deutlich, daß hochvernetzte Peripolymerisate ohne Quellmittel sulfonierbar sind und voll vergleichbare Endprodukte erhalten werden.

### Ausführungsbeispiele

### Beispiel 1

In einem Sulfierkolben mit Thermometer und Rührer werden 60 g eines kugelförmigen gelartigen Styrol-Divinylbenzok-Kopolymeren der Korngröße 0,1 - 0,8 mm, welches mit bis zu 10 Gew.% Divinylbenzol vernetzt wurde, in 240 ml 88,3 %iger Schwefelsäure verrührt und innerhalb von 90 Minuten auf 165 °C erhitzt und 10 Stunden bei dieser Temperatur gerührt. Danach wird innerhalb von 120 - 180 Minuten auf Raumtemperatur abgekühlt, die Schwefelsäure abgetrennt und die anhaftende Schwefelsäure stufenweise mit in der Konzentration abfallender Schwefelsäure ausgewaschen. Für unter diesen Ausführungsbedingungen hergestellte stark saure Kationenaustauscher, für die kugelförmige gelartige Styrol-Divinylbenzol-Kopolymere mit nachfolgenden Vernetzeranteil eingesetzt wurden, liefert die Prüfung wichtiger Kenndaten folgende Werte:

| Lfd.Nr. | Vernetzer anteil (Gew. %) | Gesamtgewichtskapazität (GGK) (mmol/g) | Wassergehalt (WG) (%) | Kugelgüte (KG) |
|---|---|---|---|---|
| 1 | 1,8 | 4,74 | 81,7 | 0,94 |
| 2 | 4,3 | 5,31 | 65,6 | 0,98 |
| 3 | 5,8 | 5,30 | 61,8 | 0,96 |
| 4 | 7,8 | 5,18 | 52,2 | 0,98 |
| 5 | 10,0 | 4,63 | 48,0 | 0,97 |

### Beispiel 2

Nach gleicher Vorgehensweise wie in Beispiel 1 wurde ein Kopolymeres mit einem Vernetzungsgrad von 7,8 % Divinylbenzol unter variierten Reaktionsbedingungen sulfoniert:

| Lfd.Nr. | Reaktionstemperatur (°C) | Reaktionszeit (h) | H₂SO₄ (%) | GGK (mmol/g) | WG (%) | KG |
|---|---|---|---|---|---|---|
| 1 | 135 | 10,0 | 94,6 | 5,23 | 50,8 | 0,98 |
| 2 | 165 | 2,0 | 84,0 | 3,11 | 30,9 | 0,99 |
| 3 | 165 | 2,5 | 82,0 | 1,10 | 12,9 | 0,99 |
| 4 | 165 | 10,0 | 85,7 | 4,98 | 52,0 | 0,98 |
| 5 | 165 | 10,0 | 88,3 | 5,18 | 52,2 | 0,98 |
| 6 | 170 | 6,0 | 87,0 | 4,99 | 52,1 | 0,97 |

### Beispiel 3

In einem Sulfierkolben, ausgestattet wie in Beispiel 1, werden 60 g eines kugelförmigen makroporösen Styrol-Divinylbenzol-Kopolymeren, welches mit bis zu 20 Gew.% Divinylbenzol vernetzt wurde, in 240 ml 94,3 %iger Schwefelsäure verrührt, Innerhalb von 60 Minuten auf 130 °C erhitzt und 8 h bei dieser Temperatur gerührt, von der Schwefelsäure getrennt und die anhaftende Schwefelsäure stufenweise durch verdünntere ausgewaschen. Für nach dieser Vorschrift hergestellte stark saure Kationenaustauscher, für die kugelförmige, makroporöse Styrol-Divinylbenzol-Kopolymere mit nachfolgendem Vernetzeranteil eingesetzt wurden, liefert die Prüfung wichtiger Kenndaten folgende Werte:

| Lfd.-Nr. | | 1 | 2 | 3 |
|---|---|---|---|---|
| Vernetzeranteil | Gew.% | 14,5 | 15 | 20 |
| Gesamtgewichtskapazität | (mmol/g) | 4,76 | 4,58 | 4,63 |
| Volumenkapazität | (mmol(ml) | 1,87 | 2,04 | 1,88 |
| Wassergehalt | (%) | 51,8 | 44,4 | 49,8 |
| Kugelgüte | | 1,0 | 0,92 | 0,98 |
| Bruch | (%) | 0 | 2 | 1 |

**Tabelle 1**

| Sulfonierung eines gelartigen Peripolymerisates mit 7,8 % Divinylbenzol vernetzten Styrolpolymeren mit und ohne inerten chlorhaltigen Quellmittel 1,2-Dichlorethan | | | | | |
|---|---|---|---|---|---|
| | | Sulfonierungstemperaturen (°C) | | | |
| Kenndaten | Dimension | 105 mit DCE | 130 mit DCE | 135 ohne | 165 ohne |
| H₂SO₄-Konz. | % | 94 | 94 | 94,6 | 88,3 |
| Reaktionszeit | h | 6 | 10 | 10 | 10 |
| Gesamtgewichtskapazität | mmol/g | 5,14 | 5,19 | 5,23 | 5,18 |
| Gesamtvolumenkapazität | mmol/ml | 2,00 | 2,14 | 2,11 | 2,06 |
| Wassergehalt | % | 51,7 | 52,7 | 50,8 | 52,2 |
| Kugelgüte | | 0,97 | 0,98 | 0,98 | 0,98 |
| Abrieb | % | 2,5 | 1,5 | 2,0 | 3,3 |
| Kugelgüte | | | | | |
| nach Schnellzyklus | | 0,66 | 0,81 | 0,87 | 0,7 |
| Bruchanteil | | | | | |
| nach Schnellzyklus | % | 2,0 | 2,0 | 1,7 | 4,0 |
| Kömung d₉₅ | mm | 0,41 | 0,42 | 0,43 | 0,41 |
| Kömung d₅ | mm | 0,99 | 0,97 | 0,95 | 0,98 |
| Unterkom | mm | 0,87 | 0,68 | 0,53 | 1,1 |

**Tabelle 2**

| Vergleich der nutzbaren Volumenkapazität mit und ohne inerten chlorhaltigen Quellmittel 1,2-Dichlorethan sulfonierter gelartiger Peripolymerisate mit 7,8 % Divinylbenzol vernetzter Styrolpolymerer | | | | |
|---|---|---|---|---|
| | Sulfonierungstemperatur (°C) | | | |
| Kenndaten | Dimension | 105 mit DCE | 135 ohne DCE | 165 ohne DCE |
| H₂SO₄ - Konz. | % | 94 | 94,6 | 88,3 |
| Reaktionszeit | h | 6 | 10 | 10 |
| Nutzbare Volumen- | | | | |
| kapazität Na⁺ / Ca²⁺ | mol/l | 1,44 | 1,55 | 1,42 |
| Gleichstrom | | | | |
| Waschwasser | BV | 4 - 6 | 4 - 6 | 4 - 6 |
| | (Bettvolumen) | | | |
| Nutzbare Volumenkapazität H⁺ /Ca²⁺ | mol/l | 1,30 | 1,35 | 1,33 |
| Gleichstrom | | | | |
| Waschwasser | BV | 4-5 | 4-5 | 4-5 |

| Nutzbare Volumenkapazität Na⁺/ Ca²⁺ Aufstrom | | | | |
|---|---|---|---|---|
| 20 m/h | mol/l | 1,11 | 1,16 | 1,09 |
| 40 m/h | mol/l | 1,05 | 1,01 | 1,02 |

| Nutzbare Volumenkapazität H⁺ /Ca²⁺ Aufstrom | | | | |
|---|---|---|---|---|
| 20 m/h | mol/l | 0,87 | 1,05 | 1,03 |
| 40 m/h | mol/l | 0,76 | 1,01 | 0,99 |

**Tabelle 3**

| Sulfonierung eines porösen Perlpolymerisates mit 14,5 % Divinylbenzol vernetzten Styrolpolymeren mit und ohne inerten chlorhaltigen Quellmittels Dichlorethan (DCE) | | | |
|---|---|---|---|
| Reaktionsbedingungen gemäß | | Sulfonierungstemperatur (°C) | |
| Ausführungsbeispiel 3 Kenndaten | Dimension | 120 mit DCE | 130 ohne DCE |
| Gesamtgewichtskapazität | mmovg | 4,81 | 4,79 |
| Gesamtsvolumenkapazität | mmol/ml | 1,99 | 2,01 |
| Wassergehalt | % | 49,4 | 48,5 |
| Kugelgüte | | 0,93 | 0,98 |
| Bruch | % | 0 | 0,8 |
| Kömung d₉₅ | mm | 0,42 | 0,41 |
| Kömung d₅ | mm | 1,04 | 1,01 |
| Nutzbare Volumenkapazität Na⁺/ Ca²⁺ | mol/l | 1,08 | 1,16 |
| Waschwasserbedarf | BV | 4,2 | 5,5 |
| Nutzbare Volumenkapazität H⁺ /Ca²⁺ | mol/l | 1,02 | 1,06 |
| Waschwasser | BV | 4 | 4 |

## Patentansprüche

1. Verfahren zur Herstellung von stark sauren Kationenaustauschem mit einer Komgröße von ≧ 0,1 mm durch Sulfonieren von gelartigen oder porösen Styrol-Divinylbenzol-Kopolymeren (Peripolymerisaten) mit einem Vernetzeranteil von 1 - 65 Gew.% Divinylbenzol, die durch Kopolymerisation von Styrol und Divinylbenzol mit oder ohne Zusatz von bis zu 45 % Inertmittel im Siedebereich von 120°-220 °C erhalten werden, mit Schwefelsäure, dadurch gekennzeichnet, daß die Peripolymerisate ohne Zusatz inerter chlorhaltiger Quellmittel unter Verwendung von konzentrierter Schwefelsäure mit einem Gehalt von 80-96% bei Temperaturen im Bereich von 125 bis 180°C bis zu 20 Stunden sulfoniert werden und nach den bekannten Methoden hydratisiert und ausgewaschen werden.

2. Verfahren zur Herstellung von stark sauren Kationenaustauschem nach Anspruch 1, dadurch gekennzeichnet, daß die Peripolymerisate allgemein mit 80 - 96 %iger, bevorzugt mit 86-94 %iger Schwefelsäure sulfoniert werden.

3. Verfahren zur Herstellung von stark sauren Kationenaustauschern nach Anspruch 1 und 2, dadurch gekennzeichnet, daß die Perlpolymerisate allgemein bis zu 20 Stunden bevorzugt 8 - 12 Stunden sulfoniert werden.

4. Verfahren zur Herstellung von stark sauren Kationenaustauschem nach Anspruch 1 - 3, dadurch gekennzeichnet, daß poröse Perlpolymerisate allgemein bei 125 - 180 °C bevorzugt bei 130 - 140 °C sulfoniert werden.

5. Verfahren zur Herstellung stark saurer Kationenaustauscher nach Anspruch 1 - 3, dadurch gekennzeichnet, daß gelartige Peripolymerisate allgemein bei 125 ° - 180 °C bevorzugt bei 160 - 170 °C sulfoniert werden.

6. Verfahren zur Herstellung von stark sauren Kationenaustauschem nach Anspruch 1 - 5, dadurch gekennzeichnet, daß die nach den ansprüchen 1 - 5 hergestellten Produkte nach den bekannten Methoden hydratisiert und ausgewaschen werden.

## Claims

1. Process for preparing strongly acidic cation exchangers having a particle size of ≥ 0.1 mm by sulphonation of gelatinous or porous styrenedivinylbenzene copolymers (bead polymers) having a crosslinker proportion of 1-65% by weight of divinylbenzene which are obtained by copolymerization of styrene and divinylbenzene with or without addition of up to 45% of inert material in the boiling range from 120° - 220°C with sulphuric acid, characterized in that the bead polymers are sulphonated without addition of inert chlorine-containing swelling agents using concentrated sulphuric acid having a content of 80 - 96% at temperatures in the range from 125 to 180°C for up to 20 hours and hydrated and washed out according to the known methods.

2. Process for preparing strongly acidic cation exchangers according to Claim 1, characterized in that the bead polymers are generally sulphonated with 80 - 96% strength, preferably with 86 - 94% strength, sulphuric acid.

3. Process for preparing strongly acidic cation exchangers according to Claims 1 and 2, characterized in that the bead polymers are generally sulphonated for up to 20 hours, preferably for 8 - 12 hours.

4. Process for preparing strongly acidic cation exchangers according to Claims 1-3, characterized in that the porous bead polymers are generally sulphonated at 125-180°C, preferably at 130-140°C.

5. Process for preparing strongly acidic cation exchangers according to Claims 1-3, characterized in that gelatinous bead polymers are generally sulphonated at 125-180°C preferably at 160-170°C.

6. Process for preparing strongly acidic cation exchangers according to Claims 1-5, characterized in that the products prepared according to Claims 1-5 are hydrated and washed out according to the known methods.

## Revendications

1. Procédé pour la préparation d'échangeurs de cations fortement acides d'une taille de grains ≥ 0,1 mm par sulfonation de copolymères de type gel ou poreux de styrène-divinylbenzène (péri polymères) avec une part d'agent de réticulation de 1-65% en poids de divinylbenzène, qui ont été obtenus par copolymérisation de styrène et de divinylbenzène avec ou sans l'ajout d'au plus 45% d'agent inerte dans un domaine de point d'ébullition de 120°-220°C, avec de l'acide sulfurique, caractérisé en ce que les péripolymères sont sulfonés sans utilisation d'agent gonflant inerte contenant du chlore en utilisant de l'acide sulfurique concentré avec une teneur de 80-96% à des températures dans le domaine de 125 à 180°C sur une durée allant jusqu'à 20 heures et sont hydratés et lavés selon les procédés connus.

2. Procédé pour la préparation d'échangeurs de cations fortement acides caractérisé en ce que les péripolymères sont en général sulfonés avec de l'acide sulfurique à 80-96%, de préférence à 86-94%.

3. Procédé pour la préparation d'échangeurs de cations fortement acides selon la revendication 1 et 2, caractérisé en ce que les péripolymères sont en général sulfonés sur une durée allant jusqu'à 20 heures, de préférence de 8-12 heures.

4. Procédé pour la préparation d'échangeurs de cations fortement acides selon la revendication 1-3, caractérisé en ce que des péripolymères poreux sont en général sulfonés à 125-180°C, de préférence à 130-140°C

5. Procédé pour la préparation d'échangeurs de cations fortement acides selon la revendication 1-3, caractérisé en ce que des péripolymères de type gel sont en général sulfonés à 125°C-180°C, de préférence à 160-170°C.

6. Procédé pour la préparation d'échangeurs de cations fortement acides selon la revendication 1-5, caractérisé en ce que les produits préparés selon les revendications 1-5 sont hydratés et lavés selon les procédés connus.
